# EUROPEAN PATENT APPLICATION

(11) **EP 2 410 675 A1**
(43) Date of publication of application: **25.01.2012**
(21) Application number: 10750470.6
(22) Date of filing: 14.01.2010
(51) Int. Cl.: H04B 10/02, H04J 14/00, H04J 14/02, H04L 12/56, H04Q 3/52

(54) **OPTICAL TRANSMISSION SYSTEM**

(30) Priority: 13.03.2009 JP 2009060551
(71) Applicant: NEC Corporation, Tokyo 108-8001 (JP)
(72) Inventor: OIKAWA, Shingo, Tokyo 108-8001 (JP)
(74) Representative: MacDougall, Alan John Shaw
(86) International application number: PCT/JP2010/000154
(87) International publication number: WO 2010/103710

(57) **Abstract**

An optical transmission system 100 includes a plurality of transmission devices 110 to 150 each configured to be capable of transmitting and receiving an optical signal at each of a plurality of different wavelengths and thereby transmitting and receiving a plurality of optical signals simultaneously. The transmission device 120 transmits an optical signal received at a transmission wavelength to each of the transmission device 130 and the transmission device 140. The optical transmission system transmits the optical signal at the transmission wavelength from the transmission device 110 to the transmission device 150 via each of a plurality of paths that partly overlap. The optical transmission system estimates, for each of the paths, a line quality representing the degree of coincidence between an optical signal transmitted by the transmission device 110 and an optical signal received by the transmission device 150.

## Description

### TECHNICAL FIELD

The present invention relates to an optical transmission system that includes a plurality of transmission devices transmitting and receiving optical signals and that transmits an optical signal from one transmission device to another transmission device.

### BACKGROUND ART

There is a known optical transmission system that includes a plurality of transmission devices transmitting and receiving optical signals and that transmits an optical signal from one transmission device (a transmission source device) to another transmission device (a transmission destination device) via a plurality of transmission devices.

In an optical transmission system described in Patent Document 1 as one of this type of optical transmission systems, each of the transmission devices is configured to be capable of transmitting and receiving an optical signal at each of a plurality of different wavelengths and thereby transmit and receive a plurality of optical signals simultaneously. In other words, this optical transmission system transmits optical signals by WDM (wavelength division multiplexing). Moreover, each of the transmission devices transmits an optical signal received from one transmission device at a certain wavelength, to another transmission device at the wavelength.

[Patent Document 1] Japanese Unexamined Patent Application Publication No. JP-A 7-143062

In the optical transmission system described above, there is a case that the line quality of a path used for transmitting an optical signal from the transmission source device to the transmission destination device decreases. A line quality is a value representing a degree of coincidence between an optical signal transmitted by the transmission source device and an optical signal received by the transmission destination device. In this case, it is preferable to change the path to another path.

Therefore, it can be considered to be preferable to configure the optical transmission system so as to set a plurality of paths connecting the transmission source device and the transmission destination device and so that the transmission destination device estimates the line quality of each of the paths based on an optical signal received via each of the paths and selects a path to be used based on the estimated line quality.

However, in this configuration of the optical transmission system, unless setting the plurality of paths so that the paths do not overlap each other, it is impossible to transmit an optical signal for estimating the line quality at one wavelength via each of the plurality of paths. In other words, in this case, there is a problem that the degree of freedom of setting the plurality of paths is low.

On the other hand, in the case of setting a plurality of paths that partly overlap, it is impossible to transmit an optical signal for estimating the line quality via each of the plurality of paths unless transmitting the signal at a different wavelength for each of the paths. In a case that a wavelength used when the transmission device transmits the optical signal changes, a feature such as a transmission speed may also change. Therefore, it is desirable that a wavelength used for transmitting an optical signal from the transmission source device to the transmission destination device is not changed before and after the path is changed.

Therefore, in the case of configuring the optical transmission system so as to set a plurality of paths that partly overlap and transmit an optical signal for estimating the line quality at a different wavelength for each of the paths, a difference is made between a wavelength used when transmitting the optical signal for estimating the line quality and a wavelength to be used when transmitting the optical signal via a path after change. Consequently, there is a problem that it is impossible to estimate the line quality with high accuracy before changing a path. Moreover, in this case, there is also a problem of decrease of the number of wavelengths that can be used for transmitting an optical signal between two transmission devices that are different from the transmission source device and the transmission destination device.

Thus, the optical transmission system described above has a problem that it is impossible to estimate the line quality with high accuracy without decreasing the degree of freedom of setting a plurality of paths.

### SUMMARY

Accordingly, an object of the present invention is to provide an optical transmission system that can solve the abovementioned problem "it is impossible to estimate the line quality with high accuracy without decreasing the degree of freedom of setting a plurality of paths."

An optical transmission system of an embodiment of the present invention for achieving the object includes a plurality of transmission devices, each transmission device being configured to be capable of transmitting and receiving an optical signal at each of a plurality of different wavelengths and thereby transmitting and receiving a plurality of optical signals simultaneously.

Moreover, the transmission device is configured to transmit an optical signal received at a certain wavelength, at the wavelength.
Further, the plurality of transmission devices include a transmission source device serving as the transmission device, a transmission destination device serving as the transmission device, a branching source device serving as the transmission device, a first branching destination device serving as the transmission device, and a second branching destination device serving as the transmission device.

Additionally, the branching source device is configured to transmit an optical signal received at a predetermined transmission wavelength to each of the first branching destination device and the second branching destination device.

Still further, the optical transmission system is equipped with:
an optical signal transmission means configured to transmit an optical signal at the transmission wavelength from the transmission source device to the transmission destination device via each of a plurality of paths including a first path and a second path, the first path being formed by an overlapping part connecting the transmission source device to the branching source device and a first branching part connecting the branching source device to the transmission destination device via the first branching destination device, and the second path being formed by the overlapping part and a second branching part connecting the branching source device to the transmission destination device via the second branching destination device; and
a line quality estimation means configured to estimate, for each of the paths, a line quality representing a degree of coincidence between an optical signal transmitted by the transmission source device and an optical signal received by the transmission destination device.

Further, an optical transmission method of another embodiment of the present invention is applied to an optical transmission system including a plurality of transmission devices, each transmission device being configured to be capable of transmitting and receiving an optical signal at each of a plurality of different wavelengths and thereby transmitting and receiving a plurality of optical signals simultaneously.

Moreover, the transmission device is configured to transmit an optical signal received at a certain wavelength, at the wavelength.
Furthermore, the plurality of transmission devices include a transmission source device serving as the transmission device, a transmission destination device serving as the transmission device, a branching source device serving as the transmission device, a first branching destination device serving as the transmission device, and a second branching destination device serving as the transmission device.

Additionally, the optical transmission method is a method including:
by transmission of an optical signal received at a predetermined transmission wavelength to each of the first branching destination device and the second branching destination device by the branching source device, transmitting an optical signal at the transmission wavelength from the transmission source device to the transmission destination device via each of a plurality of paths including a first path and a second path, the first path being formed by an overlapping part connecting the transmission source device to the branching source device and a first branching part connecting the branching source device to the transmission destination device via the first branching destination device, and the second path being formed by the overlapping part and a second branching part connecting the branching source device to the transmission destination device via the second branching destination device; and
estimating, for each of the paths, a line quality representing a degree of coincidence between an optical signal transmitted by the transmission source device and an optical signal received by the transmission destination device.

Further, a transmission device of another embodiment of the present invention is:
configured to be capable of transmitting and receiving an optical signal at each of a plurality of different wavelengths and thereby transmitting and receiving a plurality of optical signals simultaneously, and configured to transmit an optical signal received at a certain wavelength, at the wavelength; and
configured to transmit an optical signal received at a predetermined transmission wavelength to each of a first branching destination device and a second branching destination device.

Further, a computer program of another embodiment of the present invention is a program comprising instructions for causing a transmission device, which is configured to be capable of transmitting and receiving an optical signal at each of a plurality of different wavelengths and thereby transmitting and receiving a plurality of optical signals simultaneously and configured to transmit an optical signal received at a certain wavelength at the wavelength, to realize:
a branching transmission means configured to transmit an optical signal received at a predetermined transmission wavelength to each of a first branching destination device and a second branching destination device.

With the configurations of the present invention as described above, it is possible to estimate the line quality with high accuracy while preventing decrease of the degree of freedom of setting a plurality of paths.

### BRIEF DESCRIPTION OF DRAWINGS

Fig. 1 is a diagram showing a schematic configuration of an optical transmission system according to a first exemplary embodiment of the present invention;
Fig. 2 is a diagram showing a configuration of a transmission device serving as a transmission source device shown in Fig. 1;
Fig. 3 is a diagram showing a configuration of a transmission device serving as a branching source device shown in Fig. 1;
Fig. 4 is an explanation diagram conceptually showing a path that the optical transmission system shown in Fig. 1 transmits an optical signal;
Fig. 5 is a diagram showing a configuration of a transmission device serving as a transmission destination device shown in Fig. 1;
Fig. 6 is a diagram showing a schematic configuration of an optical transmission system according to a second exemplary embodiment of the present invention; and
Fig. 7 is a block diagram showing a schematic function of the optical transmission system shown in Fig. 6.

### EXEMPLARY EMBODIMENTS

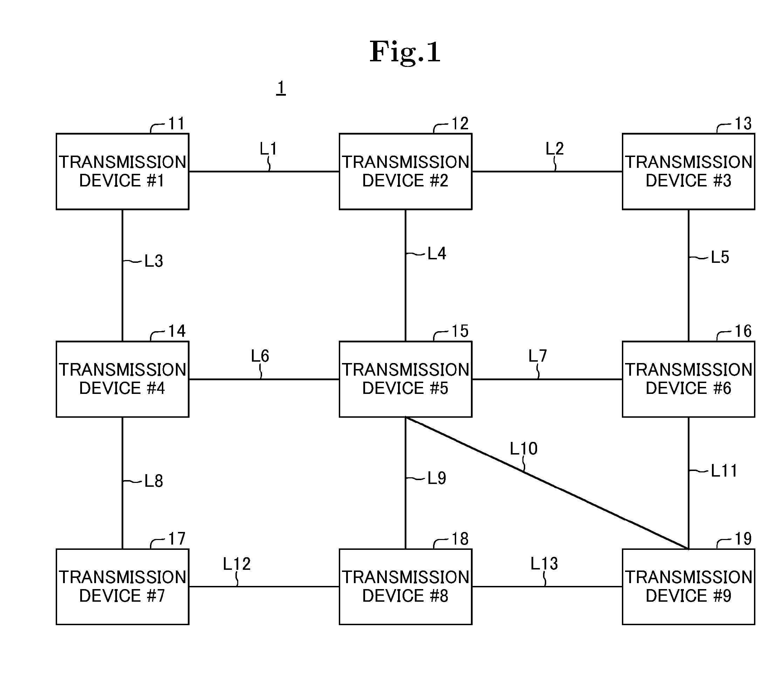

Below, an exemplary embodiment of an optical transmission system, an optical transmission method, a transmission device and a program according to the present invention will be described with reference to Figs. 1 to 7.

### <First Exemplary Embodiment>

As shown in Fig. 1, an optical transmission system 1 according to a first exemplary embodiment includes a plurality of (nine, in this exemplary embodiment) transmission devices 11 to 19.

The transmission device 11 (a transmission device #1) and the transmission device 12 (a transmission device #2) are connected via an optical fiber cable L1. The transmission device 12 and the transmission device 13 (a transmission device #3) are connected via an optical fiber cable L2. The transmission device 11 and the transmission device 14 (a transmission device #4) are connected via an optical fiber cable L3.

The transmission device 12 and the transmission device 15 (a transmission device #5) are connected via an optical fiber cable L4. The transmission device 13 and the transmission device 16 (a transmission device #6) are connected via an optical fiber cable L5. The transmission device 14 and the transmission device 15 are connected via an optical fiber cable L6.

The transmission device 15 and the transmission device 16 are connected via an optical fiber cable L7. The transmission device 14 and the transmission device 17 (a transmission device #7) are connected via an optical fiber cable L8. The transmission device 15 and the transmission device 18 (a transmission device #8) are connected via an optical fiber cable L9.

The transmission device 15 and the transmission device 19 (a transmission device #9) are connected via an optical fiber cable L10. The transmission device 16 and the transmission device 19 are connected via an optical fiber cable L11. The transmission device 17 and the transmission device 18 are connected via an optical fiber cable L12. The transmission device 18 and the transmission device 19 are connected via an optical fiber cable L13.

The optical transmission system 1 transmits an optical signal from one transmission device (a transmission source device) to another transmission device (a transmission destination device) via the transmission devices other than the transmission source device and the transmission destination device at a unique transmission wavelength to the combination of the transmission source device and the transmission destination device. Moreover, the optical transmission system 1 executes transmission of an optical signal to each of a plurality of combinations of the transmission source device and the transmission destination device simultaneously (in parallel). In other words, this optical transmission system 1 transmits an optical signal by WDM (Wavelength Division Multiplexing).

In this exemplary embodiment, the optical transmission system 1 transmits an optical signal from the transmission device 11 to the transmission device 19 at a transmission wavelength λ1. Moreover, the optical transmission system 1 transmits an optical signal from the transmission device 11 to the transmission device 18 at a transmission wavelength λ2. The transmission wavelength λ1 and the transmission wavelength λ2 are different wavelengths from each other.

Each of the transmission devices 11 to 19 is configured to be capable of transmitting and receiving an optical signal at each of a plurality of different wavelengths and thereby transmitting and receiving a plurality of optical signals simultaneously. Each of the transmission devices 11 to 19 is configured to transmit an optical signal received at a certain wavelength, at the wavelength.

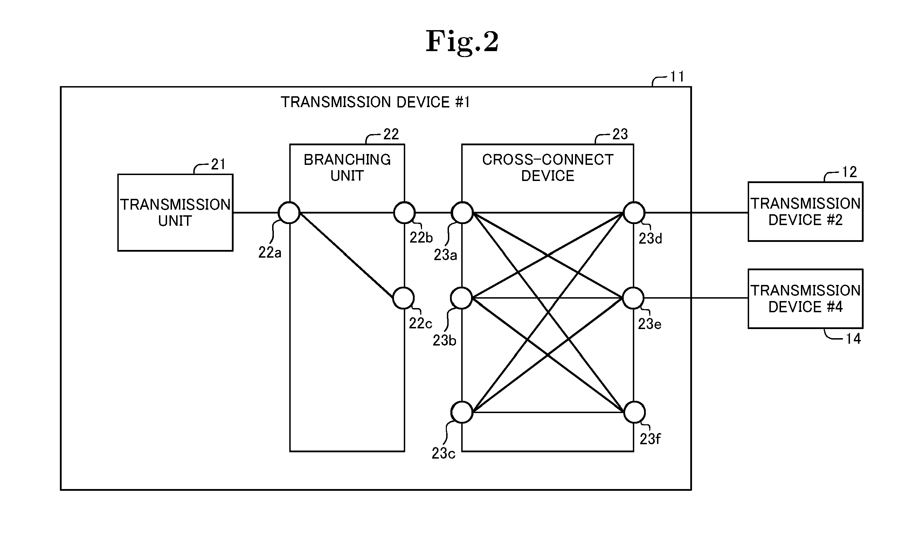

Furthermore, the transmission device 11 is equipped with a transmission unit 21, a branching unit 22, and a cross-connect device 23 as shown in Fig. 2.

The transmission unit 21 accepts an electric signal representing data outputted by an information processing device, which is not shown in the drawings, connected to the transmission device 11. Based on the accepted electric signal, the transmission unit 21 generates an optical signal at a transmission wavelength corresponding to a transmission device (a transmission destination device) that is the destination of transmission of the data represented by the electric signal.

The branching unit 22 is an optical coupler (an optical splitter). The branching unit 22 is equipped with a plurality of (three, in this exemplary embodiment) ports 22a, 22b, and 22c. The port 22a is connected with the transmission unit 21. The branching unit 22 inputs an optical signal outputted by the transmission unit 21 via the port 22a. The branching unit 22 branches the inputted optical signal, thereby outputting the same optical signal as the optical signal to each of the port 22b and the port 22c. In other words, the branching unit 22 branches the inputted optical signal, thereby generating a plurality of optical signals that are the same as the inputted optical signal.

The cross-connect device 23 is equipped with a plurality of (six, in this exemplary embodiment) ports 23a to 23f. The cross-connect device 23 is configured to be capable of connecting any two of the plurality of ports 23a to 23f for each wavelength of an inputted optical signal. The port 23a is connected with the port 22b of the branching unit 22. The port 23d is connected with the transmission device 12. The port 23e is connected with the transmission device 14.

In this exemplary embodiment, the cross-connect device 23 connects the port 23a and the port 23d for the transmission wavelength λ1. That is to say, in a case that an optical signal of the transmission wavelength λ1 is inputted via the port 23a, the cross-connect device 23 outputs the optical signal to the port 23d. Moreover, the cross-connect device 23 connects the port 23a and the port 23e for the transmission wavelength λ2. That is to say, in a case that an optical signal of the transmission wavelength λ2 is inputted via the port 23a, the cross-connect device 23 outputs the optical signal to the port 23e.

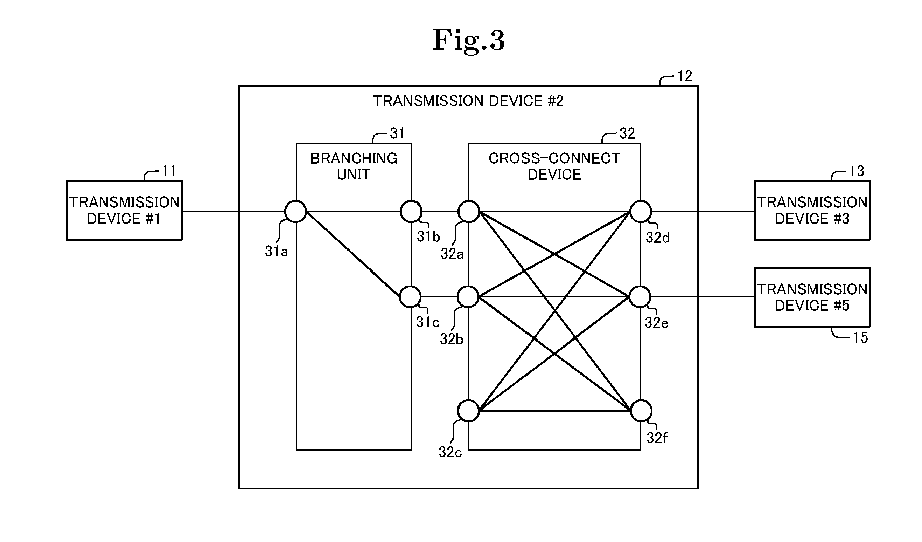

Further, as shown in Fig. 3, the transmission device 12 is equipped with a branching unit (a branching means) 31 and a cross-connect device (a connection switching means) 32. The branching unit 31 and the cross-connect device 32 configure a branching transmission means.

The branching unit 31 has a configuration like that of the branching unit 22. To be specific, the branching unit 31 is equipped with a plurality of (three, in this exemplary embodiment) ports 31a, 31b, and 31c. The port 31a is connected with the transmission device 11. The branching unit 31 inputs an optical signal outputted by the transmission device 11 via the port 31a. The branching unit 31 branches the inputted optical signal, thereby outputting the same optical signal as the inputted optical signal to each of the ports 31b and 31c.

The cross-connect device 32 has a configuration like that of the cross-connect device 23. To be specific, the cross-connect device 32 is equipped with a plurality of (six, in this exemplary embodiment) ports 32a to 32f.

The port 32a is connected with the port 31b of the branching unit 31. Moreover, the port 32b is connected with the port 31c of the branching unit 31. That is to say, the port 32a configures a first port that inputs one of a plurality of optical signals outputted by the branching unit 31, and the port 32b configures a second port that inputs the other one of the plurality of optical signals outputted by the branching unit 31.

Further, the port 32d is connected with the transmission device 13 (a first branching destination device). The port 32e is connected with the transmission device 15 (a second branching destination device). That is to say, the port 32d configures a third port connected with the first branching destination device, and the port 32e configures a fourth port connected with the second branching destination device.

In this exemplary embodiment, for the transmission wavelength λ1, the cross-connect device 32 connects the port 32a with the port 32d and also connects the port 32b with the port 32e. That is to say, in a case that an optical signal of the transmission wavelength λ1 is inputted via the port 32a, the cross-connect device 32 outputs the optical signal to the port 32d. Moreover, in a case that an optical signal of the transmission wavelength λ1 is inputted via the port 32b, the cross-connect device 32 outputs the optical signal to the port 32e.

With this configuration, the cross-connect device 32 transmits one of the optical signals outputted by the branching unit 31 to the transmission device 13 serving as the first branching destination device, and transmits the other one of the outputted optical signals to the transmission device 15 serving as the second branching destination device.

Thus, the transmission device 12 configures a branching source device that transmits an optical signal received at the transmission wavelength λ1 to each of the transmission device 13 (the first branching destination device) and the transmission device 15 (the second branching destination device).

The transmission devices 13 to 18 also have a configuration like that of the transmission device 12. To be specific, in a case that an optical signal of the transmission wavelength λ1 is inputted, the transmission device 13 outputs the optical signal to the transmission device 16. Moreover, in a case that an optical signal of the transmission wavelength λ1 is inputted, the transmission device 15 outputs the optical signal to each of the transmission device 18 and the transmission device 19. Moreover, in a case that an optical signal of the transmission wavelength λ1 is inputted, the transmission device 16 outputs the optical signal to the transmission device 19. Moreover, in a case that an optical signal of the transmission wavelength λ1 is inputted, the transmission device 18 outputs the optical signal to the transmission device 19.

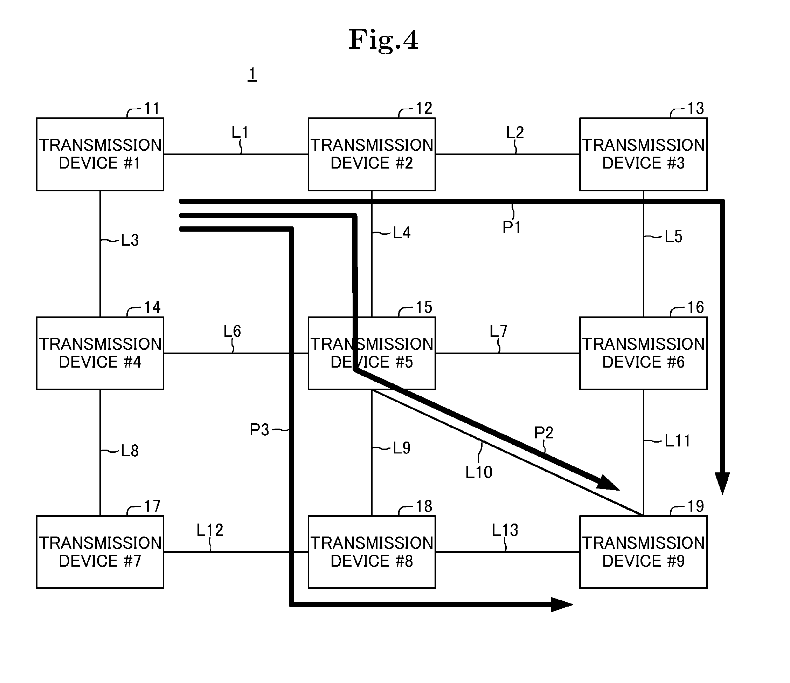

With such a configuration, as shown in Fig. 4, the optical transmission system 1 sets a plurality of (three, in this exemplary embodiment) paths P1 to P3 that an optical signal passes through to transmit an optical signal at the transmission wavelength λ1 from the transmission device 11 to the transmission device 19.

The path P1 is formed by an overlapping part connecting the transmission device 11 (the transmission source device) to the transmission device 12 (the branching source device) and a first branching part connecting the transmission device 12 to the transmission device 19 (the transmission destination device) via the transmission device 13 (the first branching destination device). Moreover, the path P2 is formed by the overlapping part connecting the transmission device 11 to the transmission device 12 and a second branching part connecting the transmission device 12 to the transmission device 19 via the transmission device 15 (the second branching destination device). Moreover, the path P3 is formed by the overlapping part connecting the transmission device 11 to the transmission device 12 and a third branching part connecting the transmission device 12 to the transmission device 19 via the transmission device 15 (the second branching destination device).

In other words, the optical transmission system 1 is equipped with an optical signal transmission means configured to transmit an optical signal at the transmission wavelength λ1 from the transmission device 11 serving as the transmission source device to the transmission device 19 serving as the transmission destination device via each of the plurality of paths P1 to P3.

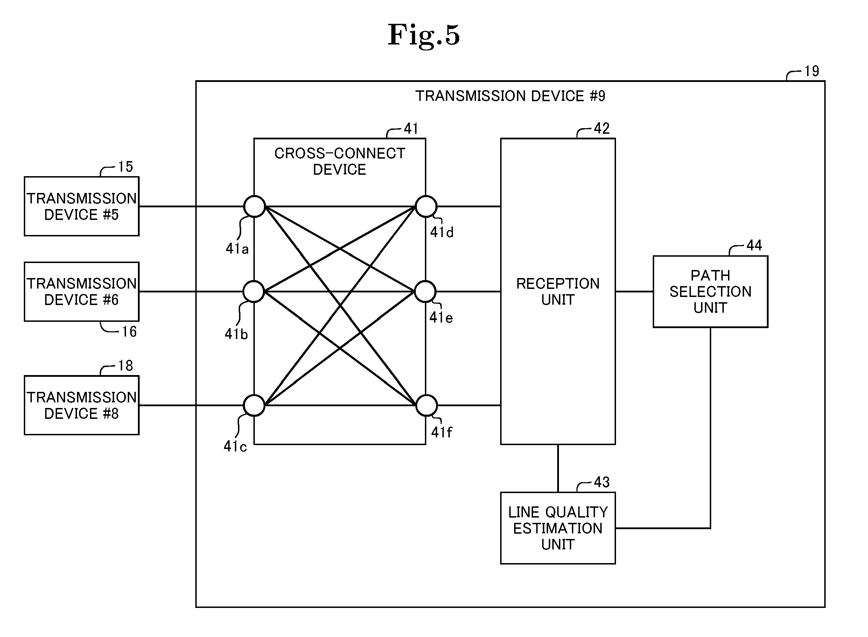

Further, as shown in Fig. 5, the transmission device 19 is equipped with a cross-connect device 41, a reception unit 42, a line quality estimation unit (a line quality estimation means) 43, and a path selection unit (a path selection means) 44.

The cross-connect device 41 has a configuration like that of the cross-connect device 23. To be specific, the cross-connect device 41 is equipped with a plurality of (six, in this exemplary embodiment) ports 41a to 41f.

The port 41a is connected with the transmission device 15. Moreover, the port 41b is connected with the transmission device 16. Furthermore, the port 41c is connected with the transmission device 18. Additionally, each of the ports 41d to 41f is connected to the reception unit 42.

In this exemplary embodiment, for the transmission wavelength λ1, the cross-connect device 41 connects the port 41a to the port 41d, connects the port 41b to 41e, and connects the port 41c to the port 41f.

In other words, in a case that an optical signal of the transmission wavelength λ1 is inputted via the port 41a, the cross-connect device 41 outputs the optical signal to the port 41d. Furthermore, in a case that an optical signal of the transmission wavelength λ1 is inputted via the port 41b, the cross-connect device 41 outputs the optical signal to the port 41e. In addition, in a case that an optical signal of the transmission wavelength λ1 is inputted via the port 41c, the cross-connect device 41 outputs the optical signal to the port 41f.

The reception unit 42 accepts the optical signal outputted from each of the ports 41d to 41f. The reception unit 42 generates electric signals based on the optical signals accepted via the respective ports 41d to 41f.

The line quality estimation unit 43 estimates the line quality of each path based on the optical signals accepted by the reception unit 42 and/or the electric signals generated by the reception unit 42. A line quality is a value representing the degree of coincidence between an optical signal transmitted by the transmission device 11 and an optical signal received by the transmission device 19.

For example, the line quality is an error ratio, a transmission loss, or a signal-to-noise ratio. An error ratio is a value representing a ratio of the amount of incorrectly received data to the total amount of received data. An error ratio can be acquired by executing error detection or error correction (e.g., FEC (Forward Error Correction)). Moreover, a transmission loss is a value representing a degree of attenuation of an optical signal. Moreover, a signal-to-noise ratio is a value representing a ratio of the amplitude (or power) of signal to the amplitude (or power) of noise.

The path selection unit 44 selects one path from among the paths P1 to P3 based on the line quality of each path estimated by the line quality estimation unit 43. In this exemplary embodiment, the path selection unit 44 selects a path of highest line quality.

The reception unit 42 uses the electric signal generated based on the optical signal accepted via the port corresponding to the path selected by the path selection unit 44, as an optical signal received from the transmission device 11. To be specific, the reception unit 42 outputs the electric signal to an information processing device, which is not shown in the drawings, connected to the transmission device 19.

Next, an operation of the optical transmission system 1 described above will be described in detail with reference to Fig. 4.
Firstly, the transmission device 11 transmits an optical signal to be transmitted to the transmission device 19, to the transmission device 12 at the transmission wavelength λ1. Next, the transmission device 12 transmits the optical signal received from the transmission device 11, to each of the transmission device 13 and the transmission device 15 at the transmission wavelength λ1 (a branching transmission step).

The transmission device 13 transmits the optical signal received from the transmission device 12, to the transmission device 16 at the transmission wavelength λ1. The transmission device 16 transmits the optical signal received from the transmission device 13, to the transmission device 19 at the transmission wavelength λ1.

Further, the transmission device 15 transmits the optical signal received from the transmission device 12, to each of the transmission device 18 and the transmission device 19 at the transmission wavelength λ1. The transmission device 18 transmits the optical signal received from the transmission device 15, to the transmission device 19 at the transmission wavelength λ.

Thus, the transmission device 19 receives the optical signal transmitted by the transmission device 11 and transmitted via each of the plurality of paths P1 to P3 (an optical signal transmission step). Then, the transmission device 19 estimates the line quality of each path based on the received optical signal (a line quality estimation step).

Next, the transmission device 19 selects a path of highest line quality from among the plurality of paths P 1 to P3 based on the estimated line quality of each path (a path selection step). Assuming the line quality of the path P1 is the highest, the description will be continued. In this case, the transmission device 19 selects the path P1.

Then, the transmission device 19 outputs an electric signal generated based on the optical signal accepted via the port 41b corresponding to the selected path P1, to an information processing device, which is not shown in the drawings, connected to the transmission device 19 (a selected optical signal use step).

Assuming the line quality of the path P1 later becomes lower than the line qualities of the other paths P2 and P3 and hence the line quality of the path P2 becomes the highest, the description will be continued. In this case, the transmission device 19 selects the path P2 instead of the path P1.

Then, the transmission device 19 outputs an electric signal generated based on the optical signal accepted via the port 41a corresponding to the selected path P2, to the information processing device, which is not shown in the drawings, connected to the transmission device 19.

As described above, according to the first exemplary embodiment of the optical transmission system of the present invention, it is possible to transmit an optical signal at one wavelength (the transmission wavelength λ1) from the transmission source device (the transmission device 11) to the transmission destination device (the transmission device 19) via each of the plurality of paths P 1 to P3 that partly overlap. As a result, it is possible to estimate the line quality with high accuracy while preventing decrease of the degree of freedom of setting a plurality of paths. Moreover, according to the configuration described above, it is also possible to prevent decrease of the number of wavelengths that can be used for transmitting an optical signal between two transmission devices that are different from the transmission source device and the transmission destination device.

Furthermore, in the first exemplary embodiment described above, the transmission destination device (the transmission device 19) is configured to use an optical signal transmitted via a path selected based on the estimated line quality, as an optical signal received from the transmission source device (the transmission device 11). According to this, the transmission destination device can use an optical signal transmitted via a properly selected path as an optical signal received from the transmission source device. As a result, it is possible to securely transmit information from the transmission source device to the transmission destination device.

Additionally, in the first exemplary embodiment described above, the transmission device 12 is equipped with the branching unit 31 that branches a received optical signal and thereby outputs a plurality of optical signals that are the same as the received optical signal. According to this, it is possible to easily realize a function that the transmission device 12 serving as the branching source device transmits an optical signal to each of the first branching destination device (the transmission device 13) and the second branching destination device (the transmission device 15).

Furthermore, in the first exemplary embodiment described above, each of the transmission devices 11 to 19 is equipped with a cross-connect device that has a plurality of ports and that is configured to be capable of connecting any two of the plurality of ports. According to this, the optical transmission system 1 can easily set a path by changing the combination of two ports to be connected.

### <Second Exemplary Embodiment>

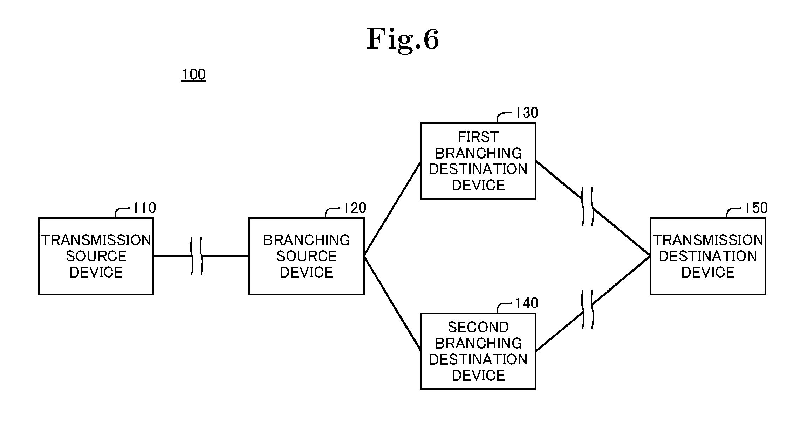

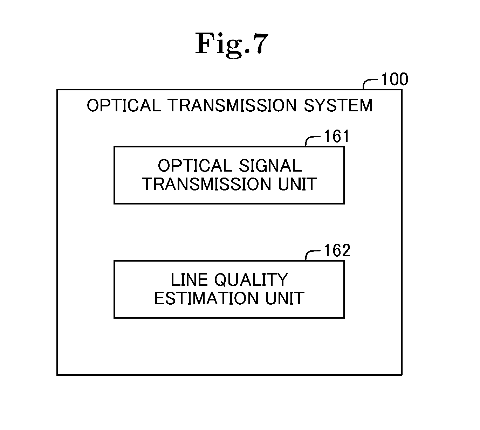

Next, an optical transmission system according to a second exemplary embodiment of the present invention will be described with reference to Figs. 6 and 7.
As shown in Fig. 6, an optical transmission system 100 according to the second exemplary embodiment includes a plurality of transmission devices 110 to 150 configured to be capable of transmitting and receiving an optical signal at each of a plurality of different wavelengths and thereby transmitting and receiving a plurality of optical signals simultaneously.

Each of the transmission devices 110 to 150 is configured to transmit an optical signal received at a certain wavelength, at the wavelength.
The plurality of transmission devices 110 to 150 include a transmission source device 110 serving as a transmission device, a transmission destination device 150 serving as a transmission device, a branching source device 120 serving as a transmission device, a first branching destination device 130 serving as a transmission device, and a second branching destination device 140 serving as a transmission device.

The branching source device 120 is configured to transmit an optical signal received at a predetermined transmission wavelength to each of the first branching destination device 130 and the second branching destination device 140.

As shown in Fig. 7, a function of the optical transmission system 100 includes an optical signal transmission unit (an optical signal transmission means) 161 and a line quality estimation unit (a line quality estimation means) 162.

The optical signal transmission unit 161 transmits an optical signal at the abovementioned transmission wavelength from the transmission source device 110 to the transmission destination device 150, via each of a plurality of paths that include a first path formed by an overlapping part connecting the transmission source device 110 to the branching source device 120 and a first branching part connecting the branching source device 120 to the transmission destination device 150 via the first branching destination device 130, and a second path formed by the overlapping part and a second branching part connecting the branching source device 120 to the transmission destination device 150 via the second branching destination device 140.

The line quality estimation unit 162 estimates, for each path, the line quality representing the degree of coincidence between the optical signal transmitted by the transmission source device 110 and the optical signal received by the transmission destination device 150.

According to this, it is possible to transmit an optical signal at one wavelength (transmission wavelength) from the transmission source device to the transmission destination device via each of the plurality of paths that partly overlap. As a result, it is possible to estimate the line quality with high accuracy while preventing decrease of the degree of freedom of setting a plurality of paths. Moreover, according to the configuration described above, it is also possible to prevent decrease of the number of wavelengths that can be used for transmitting an optical signal between two transmission devices that are different from the transmission source device and the transmission destination device.

In this case, it is preferred that the optical transmission system includes a path selection means configured to select one path from among the plurality of paths based on the estimated line quality, and the transmission destination device is configured to use an optical signal transmitted via the selected path, as an optical signal received from the transmission source device.

According to this, the transmission destination device can use an optical signal transmitted via a properly selected path, as an optical signal received from the transmission source device. As a result, it is possible to securely transmit information from the transmission source device to the transmission destination device.

In this case, it is preferred that the branching source device includes a branching means configured to branch the received optical signal and thereby output a plurality of optical signals that are the same as the received optical signal, and is configured to transmit one of the plurality of optical signals having been outputted to the first branching destination device and transmit another one of the plurality of optical signals having been outputted to the second branching destination device.

According to this, it is possible to easily realize a function that the branching source device transmits an optical signal to each of the first branching destination device and the second branching destination device.

In this case, it is preferred that the branching source device includes a connection switching means that has a plurality of ports including a first port into which one of the plurality of optical signals outputted by the branching means is inputted, a second port into which another one of the plurality of optical signals outputted by the branching means, a third port connected with the first branching destination device and a fourth port connected with the second branching device, and that is configured to be capable of connecting any two ports among the plurality of ports.

According to this, it is possible to easily set a path by changing a combination of two ports to be connected.

In this case, it is preferred that the connection switching means is a cross-connect device.

Further, an optical transmission method of another embodiment of the present invention is applied to an optical transmission system comprising a plurality of transmission devices, each transmission device being configured to be capable of transmitting and receiving an optical signal at each of a plurality of different wavelengths and thereby transmitting and receiving a plurality of optical signals simultaneously.

Furthermore, the transmission device is configured to transmit an optical signal received at a certain wavelength, at the wavelength.
Still further, the plurality of transmission devices include a transmission source device serving as the transmission device, a transmission destination device serving as the transmission device, a branching source device serving as the transmission device, a first branching destination device serving as the transmission device, and a second branching destination device serving as the transmission device.

In addition, the optical transmission method is a method including:
by transmission of an optical signal received at a predetermined transmission wavelength to each of the first branching destination device and the second branching destination device by the branching source device, transmitting an optical signal at the transmission wavelength from the transmission source device to the transmission destination device via each of a plurality of paths including a first path and a second path, the first path being formed by an overlapping part connecting the transmission source device to the branching source device and a first branching part connecting the branching source device to the transmission destination device via the first branching destination device, and the second path being formed by the overlapping part and a second branching part connecting the branching source device to the transmission destination device via the second branching destination device; and
estimating, for each of the paths, a line quality representing a degree of coincidence between an optical signal transmitted by the transmission source device and an optical signal received by the transmission destination device.

In this case, it is preferred that the optical transmission method includes selecting one path from among the plurality of paths based on the estimated line quality, and the transmission destination device is configured to use an optical signal transmitted via the selected path, as an optical signal received from the transmission source device.

In this case, it is preferred that, in the optical transmission method, the branching source device is configured to branch the received optical signal and thereby generate a plurality of optical signals that are the same as the received optical signal, and transmit one of the plurality of optical signals having been generated to the first branching destination device and transmit another one of the plurality of optical signals having been generated to the second branching destination device.

Further, a transmission device of another embodiment of the present invention is:
configured to be capable of transmitting and receiving an optical signal at each of a plurality of different wavelengths and thereby transmitting and receiving a plurality of optical signals simultaneously, and configured to transmit an optical signal received at a certain wavelength, at the wavelength; and
configured to transmit an optical signal received at a predetermined transmission wavelength to each of a first branching destination device and a second branching destination device.

In this case, it is preferred that the transmission device includes a branching means configured to branch the received optical signal and thereby output a plurality of optical signals that are the same as the received optical signal, and is configured to transmit one of the plurality of optical signals having been outputted to the first branching destination device and transmit another one of the plurality of optical signals having been outputted to the second branching destination device.

Further, a computer program of another embodiment of the present invention is a computer program including instructions for causing a transmission device, which is configured to be capable of transmitting and receiving an optical signal at each of a plurality of different wavelengths and thereby transmitting and receiving a plurality of optical signals simultaneously and configured to transmit an optical signal received at a certain wavelength at the wavelength, to realize:
a branching transmission means configured to transmit an optical signal received at a predetermined transmission wavelength to each of a first branching destination device and a second branching destination device.

In this case, it is preferred that the branching transmission means is configured to branch the received optical signal and thereby generate a plurality of optical signals that are the same as the received optical signal, and transmit one of the plurality of optical signals having been generated to the first branching destination device and transmit another one of the plurality of optical signals having been generated to the second branching destination device.

Inventions of an optical transmission method, a transmission device or a program having the abovementioned configurations have an action like that of the optical transmission system, and therefore, can achieve the abovementioned object of the present invention.

Although the present invention has been described with reference to the respective exemplary embodiments, the present invention is not limited by the abovementioned exemplary embodiments. The configuration and details of the present invention can be changed in various manners that can be understood by one skilled in the art within the scope of the present invention. For example, in the above exemplary embodiments, the cross-connect device and the branching unit are separated from each other, but the cross-connect device may include the branching unit.

Further, the cross-connect device is configured to output an inputted optical signal without converting into an electric signal in the abovementioned exemplary embodiments, but may be configured to once convert an inputted optical signal into an electric signal, generate an optical signal based on the electric signal after conversion, and output the generated optical signal.

Further, in a modified example of the abovementioned exemplary embodiments, each of the transmission devices 11 to 19 may be equipped with the reception unit 42, the line quality estimation unit 43, and the path selection unit 44. Moreover, in a modified example of the abovementioned exemplary embodiments, a device (e.g., an information processing device) other than the transmission devices may be equipped with the line quality estimation unit 43 and the path selection unit 44.

Further, in the abovementioned exemplary embodiments, two transmission devices (e.g., the transmission devices 11 and 12, the transmission devices 12 and 15, the transmission devices 12 and 13) connected via an optical fiber cable may be further connected via another transmission device and an optical fiber cable.

In the abovementioned exemplary embodiments, the optical transmission system 1 sets a plurality of paths for transmitting optical signals at the transmission wavelength λ1 from the transmission device 11 to the transmission device 19, but it is preferred that the optical transmission system 1 also sets a plurality of paths for transmitting optical signals at the transmission wavelength λ2 from the transmission device 11 to the transmission device 18. In other words, it is preferred that the optical system 1 sets a plurality of paths for any combination of the transmission source device and the transmission destination device.

Further, in the abovementioned exemplary embodiments, the transmission device 19 is configured to select a path whose estimated line quality is the highest, but may be configured to change a path in a case that the estimated line quality becomes lower than a preset threshold.

The respective functions of the transmission devices 11 to 19 in the abovementioned exemplary embodiment are realized by hardware such as circuits. The respective transmission devices 11 to 19 may be equipped with a processing device and a storage device for storing a program (software) and configured so as to realize the respective functions by execution of the program by the processing device. In this case, the program may be stored in a recording medium that can be read by a computer. For example, the recording medium is a portable medium such as a flexible disk, an optical disk, a magneto-optical disk and a semiconductor memory.

Further, as another modified example of the abovementioned exemplary embodiments, any combination of the exemplary embodiments and the modified examples may be employed.

The present invention is based upon and claims the benefit of priority from Japanese patent application No. 2009-060551, filed on March 13, 2009, the disclosure of which is incorporated herein in its entirety by reference.

### INDUSTRIAL APPLICABILITY

The present invention is applicable to an optical transmission system, and the like, that includes a plurality of transmission devices for transmitting and receiving an optical signal and transmits an optical signal from one of the transmission devices to another of the transmission devices.

### DESCRIPTION OF REFERENCE NUMERALS

- L1 to L13: optical fiber cable
- 11 to 19: transmission device
- 21: transmission unit
- 22: branching unit
- 22a to 22c: port
- 23: cross-connect device
- 23a to 23f: port
- 31: branching unit
- 31a to 31c: port
- 32: cross-connect device
- 32a to 32f: port
- 41: cross-connect device
- 41a to 41f: port
- 42: reception unit
- 43: line quality estimation unit
- 44: path selection unit
- 100: optical transmission system
- 110 to 150: transmission device
- 161: optical signal transmission unit
- 162: line quality estimation unit

## Claims

1. An optical transmission system comprising a plurality of transmission devices, each transmission device being configured to be capable of transmitting and receiving an optical signal at each of a plurality of different wavelengths and thereby transmitting and receiving a plurality of optical signals simultaneously, wherein:
the transmission device is configured to transmit an optical signal received at a certain wavelength, at the wavelength;
the plurality of transmission devices include a transmission source device serving as the transmission device, a transmission destination device serving as the transmission device, a branching source device serving as the transmission device, a first branching destination device serving as the transmission device, and a second branching destination device serving as the transmission device; and
the branching source device is configured to transmit an optical signal received at a predetermined transmission wavelength to each of the first branching destination device and the second branching destination device,
the optical transmission system comprising:
an optical signal transmission means configured to transmit an optical signal at the transmission wavelength from the transmission source device to the transmission destination device via each of a plurality of paths including a first path and a second path, the first path being formed by an overlapping part connecting the transmission source device to the branching source device and a first branching part connecting the branching source device to the transmission destination device via the first branching destination device, and the second path being formed by the overlapping part and a second branching part connecting the branching source device to the transmission destination device via the second branching destination device; and
a line quality estimation means configured to estimate, for each of the paths, a line quality representing a degree of coincidence between an optical signal transmitted by the transmission source device and an optical signal received by the transmission destination device.

2. The optical transmission system according to Claim 1, comprising:
a path selection means configured to select one path from among the plurality of paths based on the estimated line quality, wherein:
the transmission destination device is configured to use an optical signal transmitted via the selected path, as an optical signal received from the transmission source device.

3. The optical transmission system according to Claim 2, wherein:
the branching source device includes a branching means configured to branch the received optical signal and thereby output a plurality of optical signals that are the same as the received optical signal, and is configured to transmit one of the plurality of optical signals having been outputted to the first branching destination device and transmit another one of the plurality of optical signals having been outputted to the second branching destination device.

4. The optical transmission system according to Claim 3, wherein:
the branching source device includes a connection switching means that has a plurality of ports including a first port into which one of the plurality of optical signals outputted by the branching means is inputted, a second port into which another one of the plurality of optical signals outputted by the branching means, a third port connected with the first branching destination device and a fourth port connected with the second branching destination device, and that is configured to be capable of connecting any two ports among the plurality of ports.

5. The optical transmission system according to Claim 4, wherein:
the connection switching means is a cross-connect device.

6. An optical transmission method applied to an optical transmission system comprising a plurality of transmission devices, each transmission device being configured to be capable of transmitting and receiving an optical signal at each of a plurality of different wavelengths and thereby transmitting and receiving a plurality of optical signals simultaneously, wherein:
the transmission device is configured to transmit an optical signal received at a certain wavelength, at the wavelength; and
the plurality of transmission devices include a transmission source device serving as the transmission device, a transmission destination device serving as the transmission device, a branching source device serving as the transmission device, a first branching destination device serving as the transmission device, and a second branching destination device serving as the transmission device,
the optical transmission method comprising:
by transmission of an optical signal received at a predetermined transmission wavelength to each of the first branching destination device and the second branching destination device by the branching source device, transmitting an optical signal at the transmission wavelength from the transmission source device to the transmission destination device via each of a plurality of paths including a first path and a second path, the first path being formed by an overlapping part connecting the transmission source device to the branching source device and a first branching part connecting the branching source device to the transmission destination device via the first branching destination device, and the second path being formed by the overlapping part and a second branching part connecting the branching source device to the transmission destination device via the second branching destination device; and
estimating, for each of the paths, a line quality representing a degree of coincidence between an optical signal transmitted by the transmission source device and an optical signal received by the transmission destination device.

7. The optical transmission method according to Claim 6, comprising:
selecting one path from among the plurality of paths based on the estimated line quality; and
using an optical signal transmitted via the selected path, as an optical signal received from the transmission source device by the transmission destination device.

8. The optical transmission method according to Claim 7, comprising:
by branching the received optical signal by the branching source device, generating a plurality of optical signals that are the same as the received optical signal; and
transmitting one of the plurality of optical signals having been generated to the first branching destination device and transmitting another one of the plurality of optical signals having been generated to the second branching destination device.

9. A transmission device:
configured to be capable of transmitting and receiving an optical signal at each of a plurality of different wavelengths and thereby transmitting and receiving a plurality of optical signals simultaneously, and configured to transmit an optical signal received at a certain wavelength, at the wavelength; and
configured to transmit an optical signal received at a predetermined transmission wavelength to each of a first branching destination device and a second branching destination device.

10. The transmission device according to Claim 9:
including a branching means configured to branch the received optical signal and thereby output a plurality of optical signals that are the same as the received optical signal, and being configured to transmit one of the plurality of optical signals having been outputted to the first branching destination device and transmit another one of the plurality of optical signals having been outputted to the second branching destination device.

11. A computer program comprising instructions for causing a transmission device, which is configured to be capable of transmitting and receiving an optical signal at each of a plurality of different wavelengths and thereby transmitting and receiving a plurality of optical signals simultaneously and configured to transmit an optical signal received at a certain wavelength at the wavelength, to realize:
a branching transmission means configured to transmit an optical signal received at a predetermined transmission wavelength to each of a first branching destination device and a second branching destination device.

12. The computer program according to Claim 11, wherein:
the branching transmission means is configured to branch the received optical signal and thereby generate a plurality of optical signals that are the same as the received optical signal, and transmit one of the plurality of optical signals having been generated to the first branching destination device and transmit another one of the plurality of optical signals having been generated to the second branching destination device.
